# EUROPÄISCHE PATENTANMELDUNG

(11) **EP 4 390 231 A1**
(43) Veröffentlichungstag der Anmeldung: **26.06.2024**
(21) Anmeldenummer: 23210915.7
(22) Anmeldetag: 20.11.2023
(51) Int. Cl.: F24C 7/08

(54) **VERFAHREN ZUM BETRIEB EINES BEDIENSYSTEMS SOWIE BETRIEBSVORRICHTUNG UND BEWEGLICHE BEDIENVORRICHTUNG**

(30) Priorität: 21.12.2022 BE 202206061
(71) Anmelder: Miele & Cie. KG, 33332 Gütersloh (DE)
(72) Erfinder: Ennen, Volker, 32257 Bünde (DE)

(57) **Zusammenfassung**

Verfahren zum Betrieb eines Bediensystems (1, 2), vorzugsweise Kochsystems (1, 2), besonders vorzugsweise induktiven Kochsystems (1, 2),
wobei das Bediensystem (1, 2)
eine bewegliche Bedienvorrichtung (2), vorzugsweise Gargeschirr (2), mit einem Eingabeelement (23) und mit einem haptischen Sendeelement (24) und
eine Betriebsvorrichtung (1), vorzugsweise Kochfeld (1), besonders vorzugsweise induktives Kochfeld (1), mit einer Aufnahme (11), vorzugsweise Kochstelle (11), für die bewegliche Bedienvorrichtung (2) und mit einem haptischen Empfangselement (12)

aufweist,
wobei das haptische Sendeelement (24) der beweglichen Bedienvorrichtung (2) ausgebildet und eingerichtet ist, wenigstens ein haptisches Signal zu erzeugen, welches sowohl von einem Benutzer an der beweglichen Bedienvorrichtung (2), vorzugsweise am Eingabeelement (23), wahrgenommen als auch vom haptischen Empfangselement (12) der Betriebsvorrichtung (1) erfasst werden kann, wenn die bewegliche Bedienvorrichtung (2) auf der Aufnahme (11) der Betriebsvorrichtung (1) angeordnet ist,
wobei das Verfahren wenigstens die Schritte aufweist:
• Erfassen (200) einer Eingabe des Benutzers am Eingabeelement (23) der beweglichen Bedienvorrichtung (2),
• in Reaktion auf die erfasste Eingabe, Erzeugen (300) eines haptischen Signals mittels des haptischen Sendeelements (24) der beweglichen Bedienvorrichtung (2) und
• Erfassen (400) des haptischen Signals mittels des haptischen Empfangselements (12) der Betriebsvorrichtung (1).

## Beschreibung

Die Erfindung betrifft ein Verfahren zum Betrieb eines Bediensystems, eine Betriebsvorrichtung zur Durchführung eines derartigen Verfahrens sowie eine bewegliche Bedienvorrichtung zur Durchführung eines derartigen Verfahrens.

Der Trend beim heimischen Kochen geht immer weiter dazu, die Durchführung der Kochprozesse für den Benutzer einfacher, komfortabler und/oder sicherer hinsichtlich des gewünschten Kochergebnisses zu gestalten. Dies kann dadurch unterstützt werden, dass dem Benutzer vollständige Automatikprogramme bzw. Assistenzfunktionen zur Verfügung gestellt werden, welche dem Benutzer einen Teil der Durchführung oder sogar die vollständige Durchführung des Kochprozesses abnehmen sollen. Auch kann ein Kochprozess z.B. von dem Kochfeld und/oder von einem Mobilgerät unterstützt werden, indem dort der Kochprozess verfolgt, dem Benutzer dargestellt sowie die nächsten Handlungen im Rezeptablauf angezeigt bzw. entsprechende Anweisungen an den Benutzer gegeben werden.

Ferner sollen die Kochfelder optisch immer weiter aus der Küche verschwinden. Hierzu gehört es auch, die Bedienelemente der Kochfelder immer unauffälliger zu gestalten oder vollständig verschwinden zu lassen. Dies kann dazu führen, die Bedienelemente der Kochfelder auf die Kochgeschirre zu verlagern. Daher kann es erforderlich oder zumindest wünschenswert sein, dass Informationen zwischen dem Kochgeschirr und dem Kochfeld ausgetauscht werden können. Dies kann die Übermittlung von Anweisungen sowie von Messgrößen enthalten.

Zu beachten ist in jedem Fall, dass bei einer Kommunikation zwischen Kochgeschirr bzw. Gargeschirr und Kochfeld bzw. Kochstelle oder dergleichen über eine Funkübertragung z.B. mittels Transpondertechnik beachtet werden muss, dass dies eine Fernwirkung darstellen kann, d.h. eine Steuerung und/oder eine Regelung eines Gerätes durch einen Befehl, der außerhalb der Sichtweite eines Gerätes vorgenommen werden kann. Somit kann zwischen den Teilnehmern eine Kommunikation und damit verbunden eine gegenseitige oder zumindest einseitige Beeinflussung stattfinden, auch wenn sich diese nicht in ihrem bestimmungsgemäßen Einsatz befinden. Mit anderen Worten könnte z.B. auch eine Bedienung des Kochfelds bzw. der Kochstelle durch das Kochgeschirr bewirkt werden, obwohl sich das Kochgeschirr gar nicht auf dem Kochfeld bzw. auf der Kochstelle befindet. Da dies die Sicherheit des Benutzers gefährden kann, sind derartige Fernwirkungen im Haushalt gemäß der Norm DIN EN 60335-2-6 (VDE 0700-1) zu unterbinden.

Das EP 2 600 691 B1 beschreibt eine Kochfeldvorrichtung mit einer Kochfeldplatte mit einer zumindest im Wesentlichen freien Aufstellposition zu einer Beheizung eines Gargeschirrs, mit einer von einer Heizeinheit verschieden ausgebildeten Aufstellmesseinheit, welche dazu vorgesehen ist, das Aufstellen des Gargeschirrs auf die Kochfeldplatte zu detektieren, und mit einer Steuereinheit, welche dazu vorgesehen ist, bei einem Empfang eines Signals durch die Aufstellmesseinheit eine Aufstellpositionsbestimmung einzuleiten, wobei das Signal ein für das Aufstellen des Gargeschirrs auf die Kochfeldplatte charakteristischer und durch die Aufstellmesseinheit detektierter Wert einer physikalischen Größe ist, wobei die Aufstellmesseinheit zumindest zwei mit der Kochfeldplatte kommunizierende Aufstellsensoren umfasst und wobei die Steuereinheit dazu vorgesehen ist, eine zumindest grobe Bestimmung der Aufstellposition auf Grundlage von Abstandsparametern vorzunehmen, welche von einem jeweiligen Abstand der Aufstellsensoren zur Aufstellposition abhängen. Die Steuereinheit ist dazu vorgesehen, zur zumindest weitgehend genauen Bestimmung der Aufstellposition eine von der Aufstellmesseinheit verschieden ausgebildete Positionsmesseinheit zu verwenden.

Die EP 3 669 720 A1 beschreibt ein Lebensmittelzubereitungssystem mit zumindest einem Gargeschirr, welches zumindest einen Lebensmittelaufnahmeraum zu einer Aufnahme zumindest eines Lebensmittels aufweist, mit zumindest einer Sensoreinheit, welche zu einer Detektion zumindest einer Sensorkenngröße aus dem Lebensmittelaufnahmeraum vorgesehen ist und welche wenigstens teilweise in dem Gargeschirr integriert ist, und mit zumindest einer Steuereinheit, welche zu einer Ermittlung zumindest einer Komponente des Lebensmittels mittels der Sensoreinheit vorgesehen ist. Insbesondere weist das Lebensmittelzubereitungssystem zumindest eine Ausgabeeinheit auf, welche insbesondere zu einer Ausgabe zumindest einer Information, insbesondere an zumindest einen Bediener, vorgesehen ist. Unter einer Ausgabeeinheit wird insbesondere eine Einheit verstanden, welche dazu vorgesehen ist, einem Bediener insbesondere optisch und/oder akustisch und/oder haptisch zumindest eine Kenngröße bereitzustellen, wie beispielsweise eine Information und/oder eine Zeitangabe und/oder eine Bedienaufforderung und/oder eine Handlungsaufforderung und/oder eine Auswahl.

Die EP 3 653 021 A1 beschreibt ein Kochsystem mit zumindest einer Kochfeldplatte, welche zumindest einen Gargeschirraufstellbereich definiert, mit zumindest einer Anzeigeeinheit, welche bei einer senkrechten Betrachtung auf eine Haupterstreckungsebene der Kochfeldplatte wenigstens teilweise in einem Nahbereich des Gargeschirraufstellbereichs angeordnet ist, und mit zumindest einer Steuereinheit, die dazu vorgesehen ist, in wenigstens einem Betriebszustand die Anzeigeeinheit in Abhängigkeit von zumindest einem Bedienungsaufforderungsparameter zu betreiben. Unter einer "Anzeigeeinheit" wird insbesondere eine Einheit verstanden, welche dazu vorgesehen ist, einem Bediener insbesondere zumindest optisch,und/oder akustisch und/oder haptisch zumindest eine Kenngröße bereitzustellen.

Das EP 3 244 694 B1 beschreibt ein Kochsystem mit wenigstens einer ersten Kochstelle und mit wenigstens einem Kochgeschirr, wobei die erste Kochstelle und das Kochgeschirr ausgebildet sind, ein im oder an dem Kochgeschirr erzeugtes elektromagnetisches Signal und/oder Körperschallsignal von dem Kochgeschirr wenigstens an die erste Kochstelle zu übertragen. Das Kochgeschirr weist ein Bedienelement auf, welches ausgebildet ist, bei Betätigung die Erzeugung des Körperschallsignals auszulösen. Zusätzlich oder alternativ weist das Kochgeschirr ein Bedienelement auf, welches ausgebildet ist, bei Betätigung mittels einer Wandeleinrichtung das elektromagnetische Signal zu erzeugen.

Das EP 2 063 444 B1 beschreibt eine Bedieneinrichtung für ein Elektrogerät wie vorteilhaft ein Haushalts-Elektrogerät, wobei die Bedieneinrichtung mindestens ein bewegbares Bedienelement aufweist zur Bedienung durch Bewegung des Bedienelements, wobei das Bedienelement mit einer Aktuatoreinrichtung kraftverbunden ist zur haptischen Rückmeldung bei Bewegung des Bedienelementes in Abhängigkeit von der Bedienung bzw. Bewegung. Die Bedieneinrichtung weist einen Näherungs- oder Berührungssensor und eine Steuerschaltung auf, um die Aktuatoreinrichtung von einem Normal-Modus in einen stromsparenden Stand-by-Modus zu versetzen, wobei die Steuerschaltung dazu ausgebildet ist, in einem ersten Fall von erkannter Annäherung oder Berührung des Bedienelements die Aktuatoreinrichtung von dem stromsparenden Stand-by-Modus in den Normal-Modus zu versetzen, und in einem zweiten Fall von nicht vorliegender Annäherung oder Berührung des Bedienelements die Aktuatoreinrichtung von dem Normal-Modus in den stromsparenden Stand-by-Modus zu versetzen bzw. zu belassen.

Die EP 3 781 869 A1 beschreibt ein Einrichtungselement mit Bedienteil, wobei das Einrichtungselement ausgeführt ist, wenigstens einen Vorgang auszuführen, und wobei das Bedienteil ausgeführt ist, so dass der Vorgang des Einrichtungselementes in Abhängigkeit der Position des Bedienteils ausgeführt wird, wobei das Bedienteil relativ zu dem Einrichtungselement frei platzierbar ist und wobei eine Sensorik vorhanden ist, die wenigstens eine Eigenschaft des Bedienteils erfasst und in Abhängigkeit von dieser Erfassung den Vorgang des Einrichtungselementes ansteuert. Das Bedienteil ist ausgebildet, dem Nutzer eine haptische Rückmeldung, insbesondere ein Rastgefühl, zu geben, die von dem angesteuerten Vorgang des Einrichtungselementes abhängt. Damit kann der Nutzer erkennen, dass der von ihm angestrebte Vorgang, wie z.B. das Einschalten eines Kochfeldes auch tatsächlich stattgefunden hat. Anstatt einer haptischen Rückmeldung ist auch jede andere Rückmeldung an den Nutzer denkbar, wie z.B. ein optisches oder akustisches Signal.

Der Erfindung stellt sich somit das Problem, ein Bediensystem bzw. ein Verfahren zum Betrieb eines Bediensystems zur Verfügung zu stellen, um einen sicheren, insbesondere normgerechten, Betrieb des Bediensystems bei gleichzeitig möglichst hohem Komfort für den Benutzer zu ermöglichen. Dabei soll insbesondere der technische Aufwand, insbesondere hinsichtlich Anschaffung und/oder Montage der Bauteile des Bediensystems, geringgehalten werden. Zusätzlich oder alternativ soll der Bedienaufwand für einen Benutzer möglichst geringgehalten werden. In jedem Fall soll insbesondere eine Fernwirkung ausgeschlossen werden können. Dies soll in jedem Fall insbesondere möglichst einfach, kostengünstig, bauraumsparend, gewichtssparend, energiesparend und/oder intuitiv nutzbar erfolgen. Dies soll insbesondere für ein Bediensystem in Form eines Kochsystems, vorzugsweise eines induktiven Kochsystems, mit wenigstens einem Gargeschirr und mit wenigstens einem Kochfeld, vorzugsweise einem induktiven Kochfeld, erfolgen. Zumindest soll eine Alternative zu den bekannten Möglichkeiten geschaffen werden.

Erfindungsgemäß wird dieses Problem durch ein Verfahren zum Betrieb eines Bediensystems sowie durch eine Betriebsvorrichtung und eine bewegliche Bedienvorrichtung mit den Merkmalen der unabhängigen Ansprüche gelöst. Vorteilhafte Ausgestaltungen und Weiterbildungen der Erfindung ergeben sich aus den nachfolgenden abhängigen Ansprüchen.

Somit betrifft die Erfindung ein Verfahren zum Betrieb eines Bediensystems, wobei das Bediensystem eine bewegliche Bedienvorrichtung mit wenigstens einem Eingabeelement und mit wenigstens einem haptischen Sendeelement und eine Betriebsvorrichtung mit wenigstens einer Aufnahme für die bewegliche Bedienvorrichtung und mit wenigstens einem haptischen Empfangselement aufweist. Unter einem Bediensystem ist ein System mit wenigstens einer beweglichen Bedienvorrichtung und mit wenigstens einer Betriebsvorrichtung zu verstehen, so dass die bewegliche Bedienvorrichtung unabhängig von der Betriebsvorrichtung bewegt und von einem Benutzer gehandhabt, auf der Betriebsvorrichtung platziert bzw. in berührendem Kontakt gebracht und vom Benutzer verwendet werden kann, um die Betriebsvorrichtung zu bedienen, d.h. den Betrieb der Betriebsvorrichtung durch den Benutzer mittels der beweglichen Bedienvorrichtung vorzunehmen bzw. zu beeinflussen. Dies kann insbesondere bei einem Kochsystem, vorzugsweise einem induktiven Kochsystem, mit wenigstens einem Gargeschirr und wenigstens einem Kochfeld, vorzugsweise einem induktiven Kochfeld, mit wenigstens einer Kochstelle erfolgen. Dabei umfasst der Begriff "Kochfeld" auch Arbeitsplatten und andere Möbelstücke, welche abschnittsweise als Kochfeld bzw. als Kochstelle genutzt werden können. Der Begriff Kochstelle kann eine Position oberhalb einer Induktionsspule oder einer definierten Gruppe von Induktionsspulen des Kochfelds bezeichnen. Der Begriff Kochstelle kann aber auch als eine im Wesentlichen frei wählbare Position auf einer größeren Fläche des Kochfelds verstanden werden, auf der das Gargeschirr an mehreren Positionen oder gänzlich frei positioniert werden kann.

In jedem Fall ist das haptische Sendeelement der beweglichen Bedienvorrichtung ausgebildet und eingerichtet, wenigstens ein haptisches Signal zu erzeugen, welches sowohl von einem Benutzer an der beweglichen Bedienvorrichtung, vorzugsweise an dem Eingabeelement der beweglichen Bedienvorrichtung, wahrgenommen als auch vom haptischen Empfangselement der Betriebsvorrichtung erfasst werden kann, wenn die bewegliche Bedienvorrichtung auf der Aufnahme der Betriebsvorrichtung angeordnet ist, wobei das Verfahren wenigstens die Schritte aufweist:
- Erfassen einer Eingabe des Benutzers am Eingabeelement der beweglichen Bedienvorrichtung,
- in Reaktion auf die erfasste Eingabe, Erzeugen eines haptischen Signals mittels des haptischen Sendeelements der beweglichen Bedienvorrichtung und
- Erfassen des haptischen Signals mittels des haptischen Empfangselements der Betriebsvorrichtung.

Somit kann erfindungsgemäß durch die Eingabe des Benutzers an der beweglichen Bedienvorrichtung dort ein haptisches Signal wie beispielsweise eine Vibration erzeugt werden, welches in seiner Art, insbesondere hinsichtlich der Stärke des haptischen Signals, derart erzeugt wird, dass das haptische Signal zwei Funktionen gleichzeitig erfüllen kann.

So kann das haptische Signal zum einen vom Benutzer an der beweglichen Bedienvorrichtung und insbesondere direkt am Eingabeelement, welches der Benutzer gerade bedient bzw. betätigt, wahrgenommen werden, so dass der Benutzer eine haptische Rückmeldung auf seine getätigte Eingabe bzw. auf seine vorgenommene Handlung erhalten kann. Das Eingabeelement und das haptische Sendeelement können entsprechend ausgebildet sein, wie weiter unten noch näher beschrieben werden wird.

Zum anderen kann das haptische Signal über die beweglichen Bedienvorrichtung hinweg bzw. durch die bewegliche Bedienvorrichtung hindurch voranschreiten bzw. übertragen werden, durch den berührenden Kontakt mit der Aufnahme der Betriebsvorrichtung die Betriebsvorrichtung erreichen und dort von dem haptischen Empfangselement erfasst werden. Somit kann das haptische Signal als Schwingung bzw. als Körperschall zusätzlich zum haptischen Feedback an den Benutzer ferner eine Datenübertragung zur Betriebsvorrichtung hin darstellen, welche dort erfasst und verwendet werden kann, wie weiter unten noch näher beschrieben werden wird. Insbesondere kann hierdurch eine Ortung der beweglichen Bedienvorrichtung auf der Betriebsvorrichtung und/oder ein Paaren von beweglicher Bedienvorrichtung und Aufnahme der Betriebsvorrichtung stattfinden, wie weiter unten noch näher beschrieben werden wird. Dies kann insbesondere einen sicheren bzw. einen normgerechten Betrieb ermöglichen.

In jedem Fall kann der technische Aufwand vergleichsweise gering gehalten werden, da die haptische Signalerzeugung wenigstens zweifach genutzt werden kann.

Gemäß einem Aspekt der Erfindung weist das Verfahren wenigstens den weiteren Schritt auf:
- Betreiben der Betriebsvorrichtung, vorzugsweise der Aufnahme der Betriebsvorrichtung, in Abhängigkeit des erfassten haptischen Signals.

Somit kann das erfasste haptische Signal zur Beeinflussung bzw. des Veranlassens des Betriebs der Betriebsvorrichtung und insbesondere der entsprechenden Aufnahme verwendet werden. Dies kann entsprechende zusätzliche Bedieneingaben und/oder Datenübertragungen hierfür überflüssig machen und somit den Aufwand reduzieren, die Betriebsvorrichtung und insbesondere die entsprechende Aufnahme mittels der beweglichen Bedienvorrichtung zu betreiben.

Gemäß einem weiteren Aspekt der Erfindung weist das Verfahren wenigstens den weiteren Schritt auf:
- in Reaktion auf das erfasste haptische Signal, Paaren der beweglichen Bedienvorrichtung mit der Betriebsvorrichtung, vorzugsweise mit der Aufnahme der Betriebsvorrichtung.

Dies kann eine zusätzliche oder alternative Möglichkeit darstellen, das erfasst haptische Signal zu nutzen. Unter einem Paaren oder auch Pairing ist die Verbindung von der beweglichen Bedienvorrichtung und der Aufnahme der Betriebsvorrichtung zu verstehen, um mittels der beweglichen Bedienvorrichtung die Aufnahme der Betriebsvorrichtung zu bedienen und/oder um die bewegliche Bedienvorrichtung mittels der Aufnahme der Betriebsvorrichtung zu betreiben. Dies gilt insbesondere für die Kochstelle eines Kochfelds und ein Gargeschirr. Dies kann insbesondere einen normgerechten Betrieb sicherstellen.

Gemäß einem weiteren Aspekt der Erfindung weist das Verfahren wenigstens den weiteren Schritt auf:
- Ausgeben einer Information durch die Betriebsvorrichtung in Abhängigkeit des erfassten haptischen Signals.

Dies kann eine zusätzliche oder alternative Möglichkeit darstellen, das erfasst haptische Signal zu nutzen. Insbesondere kann seitens der Betriebsvorrichtung eine Information ausgegeben werden, welche dem Benutzer ein erfolgreiches Paaren und/oder die Umsetzung der Eingabe des Benutzers an der beweglichen Bedienvorrichtung seitens der Betriebsvorrichtung mitteilen kann. Das Ausgeben der Information kann seitens der Betriebsvorrichtung optisch, akustisch und/oder haptisch erfolgen.

Vorzugsweise wird die Betriebsvorrichtung für einen vorbestimmten Zeitraum vor und/oder nach dem Empfang des haptischen Codes in einen veränderten Betriebsmodus versetzt. Besonders bevorzugt ist der veränderte Betriebsmodus ein Betriebsmodus, in dem Signale, welche über einen zweiten Kommunikationskanal, wie etwa einen Bluetooth-Kanal, übertragen werden, anders verarbeitet werden als in dem vorangegangenen Betriebsmodus. Insbesondere können in den veränderten Betriebsmodus Signale verarbeitet werden, die eine Steuerung, Aktivierung und/oder Deaktivierung von Funktionen der Betriebsvorrichtung auslösen, welche in den vorangegangenen Betriebsmodus nicht auslösbar waren. Der zweite Kommunikationskanal ist vorzugsweise ein kabelloser Kommunikationskanal. Durch den zweiten Kommunikationskanal kann neben einer Kommunikation über ein haptisches Signal eine größere Menge an Daten zuverlässig übertragen werden. Beispiele von Funktionen der Betriebsvorrichtung, die über den zweiten Kommunikationskanal gesteuert werden können, sind ein Anschalten oder Ausschalten der Betriebsvorrichtung, ein Setzen von Leistungsstufen und/der Solltemperaturen, ein Starten oder Beenden eines Automatikprogrammes und/oder einer Kochassistenzfunktion, die Übertragung von sicherheitsrelevanten Daten oder Befehlen.

Gemäß einem weiteren Aspekt der Erfindung weist die Betriebsvorrichtung wenigstens zwei Aufnahmen für die bewegliche Bedienvorrichtung und wenigstens zwei haptische Empfangselemente auf, wobei jedes haptische Empfangselement vorzugweise einer der beiden Aufnahmen zugeordnet angeordnet ist, wobei das Verfahren wenigstens die Schritte aufweist:
- Erfassen des haptischen Signals mittels der haptischen Empfangselemente der Betriebsvorrichtung und
- Zuordnen der beweglichen Bedienvorrichtung zu einer der Aufnahmen der Betriebsvorrichtung in Abhängigkeit des erfassten haptischen Signals, vorzugsweise in Abhängigkeit der Stärke und/oder eines Zeitpunkts des erfassten haptischen Signals.

Hierdurch kann eine entsprechend Zuordnung von beweglichem Bedienelement und derjenigen Aufnahme der Betriebsvorrichtung erfolgen, falls mehrere Aufnahmen vorhanden sind.

Gemäß einem weiteren Aspekt der Erfindung weist die Betriebsvorrichtung wenigstens zwei Aufnahmen für die bewegliche Bedienvorrichtung und/oder die Möglichkeit einer freien Platzierbarkeit der beweglichen Bedienvorrichtung auf der Betriebsvorrichtung und wenigstens zwei, bevorzugt wenigstens drei haptische Empfangselemente auf, wobei die haptischen Empfangselemente mit einem Abstand an der Betriebsvorrichtung angeordnet sind, wobei das Verfahren wenigstens die Schritte aufweist:
- Erfassen des haptischen Signals mittels der haptischen Empfangselemente der Betriebsvorrichtung und
- Zuordnen der beweglichen Bedienvorrichtung zu einer der Aufnahmen der Betriebsvorrichtung und/oder einer Position auf der Betriebsvorrichtung in Abhängigkeit des erfassten haptischen Signals, vorzugsweise in Abhängigkeit der Stärke des erfassten haptischen Signals und/oder des Zeitpunkts der Messung des haptischen Signals durch die einzelnen haptischen Empfangselemente.

Hierdurch kann eine entsprechend Zuordnung von beweglichem Bedienelement und derjenigen Aufnahme der Betriebsvorrichtung und bzw. der Position der beweglichen Bedienvorrichtung auf der Betriebsvorrichtung erfolgen.

Vorzugsweise basiert die Zuordnung der beweglichen Bedienvorrichtung zu einer der Aufnahmen der Betriebsvorrichtung auf einer Triangulation des erfassten haptischen Signals. Hierfür verfügt die Betriebsvorrichtung vorzugsweise über mindestens drei haptische Empfangselemente. De Triangulation kann beispielsweise über eine Laufzeitmessung der entsprechenden Signale erfolgen. Dabei kann die Position der Signalquelle, also der beweglichen Bedienvorrichtung und dadurch eine entsprechende Zuordnung zu der Betriebsvorrichtung bestimmt werden.

Gemäß einem weiteren Aspekt der Erfindung ist das haptische Empfangselement der Betriebsvorrichtung unterhalb einer Abdeckung der Betriebsvorrichtung, beispielsweise unmittelbar unterhalb der Aufnahme, der Betriebsvorrichtung angeordnet. Dies kann eine Möglichkeit der Umsetzung darstellen. Insbesondere kann dies die Zuordnung der beweglichen Bedienvorrichtung zu der Aufnahme der Betriebsvorrichtung erleichtern. Dies gilt entsprechend für mehrere Aufnahmen mit jeweils einem haptischen Empfangselement.

Gemäß einem bevorzugten alternativen oder ergänzenden Aspekt der Erfindung ist das haptische Empfangselement, insbesondere jedes der haptischen Empfangselemente unterhalb der Abdeckung der Betriebsvorrichtung und außerhalb eines Bereichs einer jeweiligen Aufnahme, wie etwa in einem Randbereich der Abdeckung angeordnet. Hierdurch kann die Anzahl von haptischen Empfangselementen außer eines Streufeldes und außerhalb einer thermischen Beanspruchung durch Spulen der Betriebsvorrichtung liegen.

Gemäß einem weiteren Aspekt der Erfindung ist das Eingabeelement der beweglichen Bedienvorrichtung ausgebildet und eingerichtet, wenigstens zwei unterschiedliche Eingaben des Benutzers zu erfassen, wobei das haptische Sendeelement ausgebildet und eingerichtet ist, in Abhängigkeit der erfassten Eingabe zwei unterschiedliche haptische Signale zu erzeugen, und wobei das haptische Empfangselement der Betriebsvorrichtung ausgebildet und eingerichtet ist, die beiden haptischen Signale zu unterscheiden. Dies kann die Möglichkeiten der Datenübertragung entsprechend erhöhen bzw. verbessern.

Gemäß einem weiteren Aspekt der Erfindung erfolgt das Betreiben der Betriebsvorrichtung in Abhängigkeit der erfassten unterschiedlichen haptischen Signale. Dies kann die Möglichkeiten der Bedienung der Betriebsvorrichtung entsprechend erhöhen bzw. verbessern.

Gemäß einem weiteren Aspekt der Erfindung unterscheiden sich die beiden haptischen Signale durch ihre Amplitude, durch ihre Frequenz und/oder durch ein aufmoduliertes Muster. Dies kann verschiedene Möglichkeiten der konkreten Umsetzung darstellen.

Gemäß einem weiteren Aspekt der Erfindung ist das Eingabeelement der beweglichen Bedienvorrichtung als feststehendes Eingabeelement ausgebildet. Dies kann die Verwendung eines vergleichsweise einfachen Eingabeelements ermöglichen, indem das Eingabeelement keine beweglichen Teile wie bei einem Taster, Schalter, Schieber, Drehknopf und dergleichen aufweist. Vielmehr kann die haptische Rückmeldung des Eingabeelements auf eine Eingabe bzw. auf eine Betätigung durch den Benutzer mittels des haptischen Signals erfolgen, wie zuvor beschrieben.

Gemäß einem weiteren Aspekt der Erfindung ist das Eingabeelement der beweglichen Bedienvorrichtung ein kapazitives Sensorelement, ein druckempfindliches Sensorelement, ein kapazitiver Slider oder ein Touchdisplay. Dies kann verschiedene Möglichkeiten der Umsetzung darstellen.

Gemäß einem weiteren Aspekt der Erfindung ist das haptische Sendeelement ein ERM-Element, ein LRA-Element oder ein piezobasierender Aktuator. Dies kann verschiedene Möglichkeiten der Umsetzung darstellen.

Gemäß einem weiteren Aspekt der Erfindung ist bzw. sind das Eingabeelement und/oder das haptische Sendeelement an oder in einem Griffelement der beweglichen Bedienvorrichtung angeordnet. Dies kann eine konkrete Möglichkeit der Umsetzung darstellen. Dies kann für den Benutzer die Bedienung bzw. Betätigung des Eingabeelement vereinfachen, weil der Benutzer die bewegliche Bedienvorrichtung, insbesondere als Gargeschirr, ohnehin am Griffelement bewegen wird und somit dort das Eingabeelement nutzen kann, ohne hierfür umgreifen zu müssen. Ebenso kann die Anordnung des haptischen Sendeelement am bzw. im Griffelement es begünstigen, ein haptisches Signal zu erzeugen, welches vom Benutzer dort wahrgenommen werden kann. Hierzu kann es vorteilhaft sein, dass Griffelement über das haptischen Sendeelement mit der übrigen beweglichen Bedienvorrichtung zu verbinden, so dass das Griffelement als Ganzes vom haptischen Sendeelement zu Schwingungen angeregt werden kann, was die Erzeugung eines vom Benutzer sicher wahrnehmbaren haptischen Signals begünstigen kann.

Die Erfindung betrifft auch eine Betriebsvorrichtung, vorzugsweise ein Kochfeld, besonders vorzugsweise ein induktives Kochfeld, zur Durchführung eines Verfahrens wie zuvor beschrieben. Auf diese Art und Weise kann eine Betriebsvorrichtung bereitgestellt werden, um die Durchführung des zuvor beschriebenen erfindungsgemäßen Verfahrens mit dessen Eigenschaften und Vorteilen zu ermöglichen.

Die Erfindung betrifft ferner eine bewegliche Bedienvorrichtung, vorzugsweise ein Gargeschirr, zur Durchführung eines Verfahrens wie zuvor beschrieben. Auf diese Art und Weise kann eine bewegliche Bedienvorrichtung bereitgestellt werden, um die Durchführung des zuvor beschriebenen erfindungsgemäßen Verfahrens mit dessen Eigenschaften und Vorteilen zu ermöglichen.

Mit anderen Worten geht die Erfindung davon aus, dass für den Nutzer eines Geräts mit einem Eingabemedium, welches sich bei einer Eingabe nicht signifikant verformt, z.B. Touchscreen, Sensortasten und dergleichen, es wichtig ist, auf einem anderen Weg die Information zu erhalten, dass seine Eingabe vom Gerät erkannt wurde. Besonders intuitiv kann dieses Problem gelöst werden, wenn dem Nutzer durch eine Einrichtung zur Erzeugung geeigneter Schwingungen das Gefühl gegeben wird, dass er eine mechanisch bewegliche Taste gedrückt hat, also ein haptisches Feedback bestätigt die erfolgreiche Eingabe. Dieser Ansatz wird z.B. bei der zentralen runden Taste auf einigen Smartphone-Modellen erfolgreich umgesetzt.

Wenn ein user interface an einem intelligenten Gargefäß für die Bedienung des Kochfelds genutzt wird, bestehen besondere Sicherheitsanforderungen. Dabei ist es wichtig, dass sichergestellt wird, dass sich das Gargefäß zum Zeitpunkt der Bedienung auf dem Kochfeld befindet.

Des Weiteren kann es nützlich sein, die Position des Gargefäßes auf dem Kochfeld zu kennen, um die aus der Eingabe resultierenden Regelungsschritte an der richtigen Kochzone / Position / Spule / Spulengruppe auszuführen.

Nachteilig bei der üblichen Kommunikation über WLAN oder Bluetooth (BT) ist, dass diese Kommunikation Zusatzmaßnahmen erfordert um sicherzustellen, dass sich das Gargefäß direkt auf dem Kochfeld befindet. Diese Zusatzmaßnahmen erhöhen den Aufwand und die Kosten für das Gerät.

Es soll daher eine Möglichkeit eröffnet werden, mit derselben Baugruppe sowohl den Kundennutzen durch ein intuitives Bedienerlebnis und eine hochwertige Haptik als auch und gleichzeitig die Sicherheit der Kommunikation zu erhöhen. Hierdurch kann das Produkt gleichzeitig besser und günstiger gestaltet werden.

Ein Gargefäß verfügt über mindestens eine Eingabemöglichkeit. Bei der Eingabemöglichkeit kann es sich z.B. um eine kapazitive Sensortaste, eine druckempfindliche Sensortaste hinter einer minimal verformbaren Oberfläche, einen kapazitiven Slider oder ein Touchdisplay handeln. Neben den klassischen Eingabeelementen kann es sich bei der Bedienmöglichkeit auch um die Detektion einer sonstigen Manipulation an dem Gargerät oder einem damit verbundenen Gegenstand handeln. Bei der Manipulation kann es sich z.B. um ein Anheben, Drehen oder Verschieben des Gargefäßes oder des Deckels handeln.

Um dem Nutzer eine Rückmeldung zu der Bedienung zu geben, verfügt bzw. verfügen das Gargefäß und/oder der damit verbundene Gegenstand über mindestens eine Einrichtung zur Erzeugung eines haptischen Feedbacks. Dabei kann es sich z.B. um eine ERM-Einrichtung (Eccentric Rotary Mass), eine LRA-Einrichtung (Linear Resonant Actuators) oder piezobasierende Aktuatoren handeln.

Sind mehrere Eingabemöglichkeiten verfügbar oder können über eine Eingabemöglichkeit verschiedene Werte eingestellt werden, z.B. Slider, so kann den unterschiedlichen Eingaben je ein unterschiedliches Vibrationssignal zugeordnet werden. Dabei kann sich z.B. die Amplitude oder die Frequenz oder ein auf die Vibration aufmoduliertes Muster unterscheiden. Diese Signale können sich so stark unterscheiden, dass sie sich für den Nutzer deutlich unterschiedlich anfühlen. Ein Beispiel hierfür ist eine steigende Amplitude der Schwingung bei steigenden Werten eines Sliders. Somit kann der Nutzer das Gerät nach einer kurzen Eingewöhnungszeit auch blind bedienen. Alternativ können die Unterschiede zwischen den Vibrationssignalen so gewählt sein, dass sie im Wesentlichen nur gemessen, aber nicht durch den Nutzer gefühlt werden können.

Die Einrichtung zur Erzeugung des haptischen Feedbacks kann so in das Gargefäß integriert sein, dass sich die Schwingung auch auf die darunter befindliche Oberfläche überträgt. Bei der Oberfläche kann es sich z.B. um die Oberfläche eines Kochfelds oder die Oberfläche einer Arbeitsplatte oder eines sonstigen Möbels handeln.

Die Übertragung der Schwingung von der Einrichtung zur Erzeugung des haptischen Feedbacks kann z.B. über die Gargefäßwände und den Gargefäßboden und/oder über zusätzliche Anbauteile und/oder eine Gargefäßhülle eines zweischaligen Gargefäßes und/oder die Füße bzw. Abstandhalter eines thermisch vom Untergrund abgekoppelten Gargefäßes erfolgen.

Eine Einrichtung zur Detektion einer Schwingung kann Bestandteil eines klassischen Kochfelds und/oder einer unter einer Arbeitsplatte angebrachten Einrichtung zur induktiven Erwärmung eines darüber befindlichen Gargeschirrs, ein sogenanntes vollintegriertes Kochfeld, und/oder einer Einrichtung zur induktiven Bereitstellung von elektrischer Energie für ein kabelloses Kleingerät sein. Alternativ kann sie auch direkt an und/oder in der Arbeitsplatte oder sonstigen sich im Betrieb unter dem Gargefäß befindlichen Oberflächen angeordnet und über eine Datenverbindung direkt oder indirekt mit der Steuereinheit des Kochfelds verbunden sein.

Die Einrichtung zur Detektion einer Schwingung ist so ausgelegt, dass sie die durch die Einrichtung zur Erzeugung eines haptischen Feedbacks erzeugten und vom Gargefäß auf die Unterlage übertragenen Schwingungen detektieren kann.

In einer Auswerteeinheit kann eine Auswertung der Messwerte im Hinblick auf einen oder mehrere Parameter der gemessenen Schwingung wie z.B. Amplitude, Frequenz, aufmodulierte Signale und dergleichen erfolgen. Die Auswertung kann mittels einer eigenständigen Elektronik oder integriert in eine sonstige Elektronik wie z.B. eine Bedienelektronik eines Kochfelds erfolgen.

Als Ergebnis der Auswertung der gemessenen Schwingung liegt in der Auswerteeinheit eine Information über die vom Nutzer am Gargefäß getätigte Eingabe vor. Diese kann an die Energiebereitstellungseinheit des Kochfeldes wie z.B. den Generator eines Induktionskochfelds weitergeleitet und dort ausgeführt werden.

Die oben beschriebene Methode zur Informationsübermittlung kann als alleinige Kommunikationsmethode zwischen dem Eingabeelement am Gargefäß und der Gerätesteuerung bzw. Leistungselektronik im Kochfeld oder als Ergänzung zu einer parallelen Informationsübermittlung über einen anderen Kanal wie z.B. Bluetooth oder WLAN genutzt werden.

Im obigen Text wird das Prinzip im Wesentlichen anhand einer in ein Gargefäß integrierten Bedieneinheit für die Bedienung des Systems aus Gargefäß und Kochfeld dargestellt. Das Prinzip kann aber auch auf andere Systeme mit mindestens einem Eingabeelement an einem beweglichen Gerät, welches in direkt oder indirekt schwingungsübertragendem Kontakt mit einem zu bedienenden Gerät steht, genutzt werden. Dabei kann es sich z.B. um ein Kleingerät wie einen Foodprozessor oder eine Fritteuse auf einer Arbeitsplatte mit darunter befindlicher induktiver Stromversorgung für das Kleingerät handeln. Des Weiteren kann das Bedienelement auch abnehmbar sein, wobei im Betrieb durch eine feste mechanische Anbindung an das Gargefäß und/oder Kleingerät eine Übertragung der Schwingung gewährleistet wird.

Die mittels der Einrichtung zur Erzeugung des haptischen Feedbacks erzeugten Schwingungen können optional auch für ein Pairing zwischen dem Gargeschirr und dem Kochfeld genutzt werden. Des Weiteren ist eine Ortung des Gargefäßes auf dem Kochfeld bzw. der Arbeitsplatte bei Nutzung mehrerer Vibrationssensoren unter der Kochfelddeckplatte bzw. Arbeitsplatte z.B. über eine Laufzeitmessung bzw. Triangulation und/oder den Vergleich der Schwingungsamplitude an verschiedenen Positionen möglich.

Hierdurch kann eine verbesserte und z.B. gegen böswillige digitale Manipulationen besonders gut gesicherte Kommunikation und Verbesserung der Nutzerinteraktion mit demselben System erreicht werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Betriebssystems in Form eines Kochsystems zur Durchführung eines erfindungsgemäßen Verfahrens; und
- Figur 2: ein Ablaufdiagramm eines erfindungsgemäßen Verfahrens.

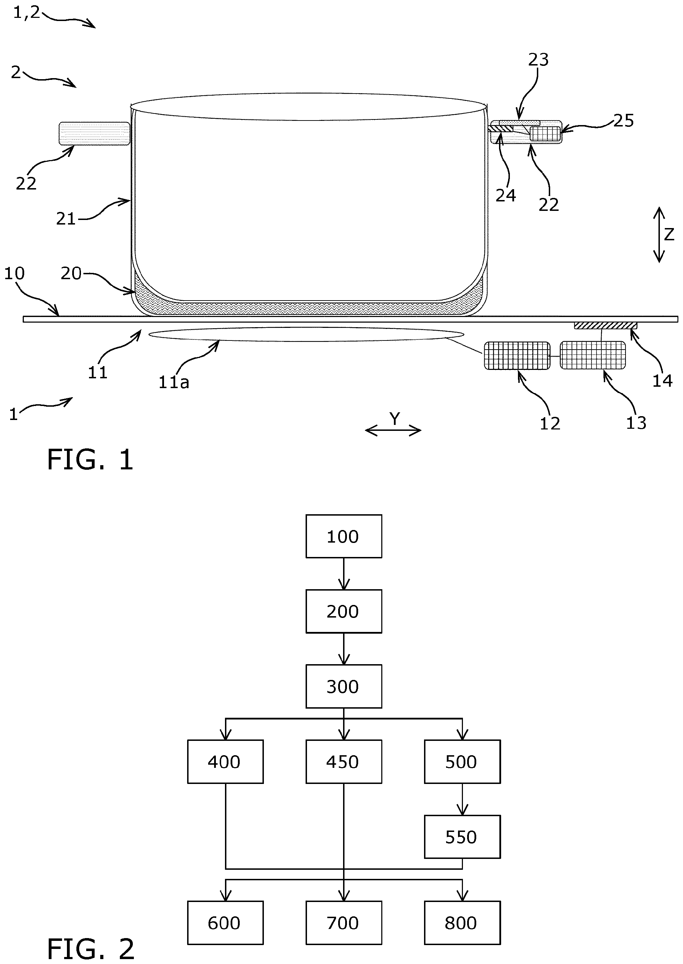

Die Figur 1 wird in kartesischen Koordinaten betrachtet. Es erstreckt sich eine Längsrichtung (nicht dargestellt), welche auch als Tiefe oder als Länge bezeichnet werden kann. Senkrecht zur Längsrichtung erstreckt sich eine Querrichtung Y, welche auch als Breite Y bezeichnet werden kann. Senkrecht sowohl zur Längsrichtung als auch zur Querrichtung Y erstreckt sich eine vertikale Richtung Z, welche auch als Höhe Z bezeichnet werden kann und der Richtung der Schwerkraft entspricht. Die Längsrichtung und die Querrichtung Y bilden gemeinsam die Horizontale, welche auch als horizontale Ebene bezeichnet werden kann.

Es wird ein erfindungsgemäßes Bediensystem 1, 2 am Beispiel eines induktiven Kochsystems 1, 2 betrachtet. Das Bediensystem 1, 2 weist eine Betriebsvorrichtung 1 in Form eines induktiven Kochfelds 1 und eine bewegliche Bedienvorrichtung 2 in Form eines Gargeschirrs 2 bzw. eines Kochtopfs 2 auf.

Das induktive Kochfeld 1 weist eine Abdeckung 10 in Form einer Glaskeramikplatte 10 auf, welche jedoch auch eine Arbeitsplatte 10 sein kann. In jedem Fall ist eine Aufnahme 11 in Form einer Kochstelle 11 vorgesehen, wobei auch mehrere Kochstellen 11 (nicht dargestellt) vorhanden sein könnten. Die Kochstelle 1 weist in der vertikalen Richtung Z unterhalb der Glaskeramikplatte 10 eine Induktionsspule 11a auf, wobei auch mehrere Induktionsspulen 11a (nicht dargestellt) der Kochstelle 11 zugeordnet sein bzw. die Kochstelle 11 gemeinsam bilden könnten. In jedem Fall ist eine Leistungselektronik 12 vorhanden, um die Induktionsspule 11a zu betreiben bzw. zu speisen. Es ist ferner eine Steuerungseinheit 13 bzw. eine Auswerteeinheit 13 vorhanden, um u.a. die Leistungselektronik 12 anzusteuern. Die Steuerungseinheit 13 ist ferner signalübertragend mit einem haptischen Empfangselement 14 in Form eines Schwingungsmessers 14 verbunden, um Schwingungen im Bereich der Kochstelle 11 zu erfassen und diese Sensorinformation der Steuerungseinheit 13 zur Verfügung zu stellen.

Das Gargeschirr 2 bzw. der Kochtopf 2 weist einen Gargeschirrboden 20 auf, mit dem der Kochtopf 2 auf der Kochstelle 11 des Kochfelds 1 aufgestellt werden kann. Vom Gargeschirrboden 20 erstreckt sich eine Gargeschirrwand 21 bzw. eine Gargeschirrwandung 21 in der vertikalen Richtung Z nach oben, so dass vom Gargeschirrboden 20 und der zylindrischen Gargeschirrwand 21 ein Garraum (nicht bezeichnet), nach oben hin offen, umschlossen wird.

Im oberen Bereich der Gargeschirrwand 21 sind einander diametral gegenüberliegend zwei Griffelemente 22 in Form von Henkeln 22 angeordnet. Der eine, in der Darstellung der Figur 1 rechte, Henkel 22 weist dabei auf seiner Oberseite ein Eingabeelement 23 auf, welches als kapazitives Sensorelement 23, als druckempfindliches Sensorelement 23, als kapazitiver Slider 23 oder auch als Touchdisplay 23 umgesetzt sein kann. Der rechte Henkel 22 ist mittels eines haptischen Sendeelements 24, welches als ERM-Element 24, als LRA-Element 24 oder als piezobasierender Aktuator 24 realisiert sein kann, mit der Gargeschirrwand 21 verbunden, so dass der rechte Henkel 22 vom haptischen Sendeelement 24 zu Schwingungen angeregt werden kann. Das Eingabeelement 23 und das haptische Sendeelement 24 sind mit einer Steuerungseinheit 25 des Kochtopfs 2 signalübertragend verbunden und können somit von der Steuerungseinheit 25 des Kochtopfs 2 betrieben bzw. abgefragt werden.

Betätigt ein Benutzer das Eingabeelement 23 des Kochtopfs 2, so wird dies von der Steuerungseinheit 25 des Kochtopfs 2 erkannt und in Reaktion hierauf das haptische Sendeelement 24 betätigt bzw. betrieben, so dass zum einen der Benutzer durch Schwingungen des rechten Handgriffs 22 des Kochtopfs 2 direkt eine haptische Rückmeldung auf seine Eingabe dort erhält. Das haptische Signal wird jedoch ausreichend stark erzeugt, sodass sich das haptische Signal gleichzeitig durch die Gargeschirrwand 21 und durch den Gargeschirrboden 20 ausbreiten kann. Ist der Kochtopf 2 auf der Kochstelle 11 des Kochfelds 1 aufgesetzt, so geht das haptische Signal bzw. dessen Schwingungen auf die Glaskeramikplatte 10 des Kochfelds 1 über und erreicht somit dessen haptisches Empfangselement 14.

Entsprechend kann das haptische Signal zusätzlich vom haptischen Empfangselement 14 erfasst werden, was von der Steuerungseinheit 13 des Kochfelds 1 erkannt werden kann. Diese sensorisch erfasste Information kann zu einem Paaren von Kochtopf 2 und Kochstelle 11 verwendet werden. Auch kann die Kochstelle 11 in Abhängigkeit des erfassten haptischen Signals betrieben werden. Dies kann auch eine Ausgabe einer Information seitens des Kochfelds 1 auslösen, um dem Benutzer beispielsweise ein erfolgreiches Paaren mitzuteilen, beispielsweise über ein akustisches Signal.

Dabei können auch unterschiedliche haptische Signal in Abhängigkeit unterschiedlicher Eingaben des Benutzers erzeugt und übertragen werden, welche entsprechend unterschiedliche Reaktionen wie beispielsweise unterschiedliche Betriebsmöglichkeiten des Kochtopfs 2 auf der Kochstelle 11, beispielsweise mit unterschiedlichen Leistungsstufen, auslösen können. Dabei können sich die haptischen Signale in ihrer Amplitude, in ihrer Frequenz und/oder in einem aufmodulierten Signal unterscheiden. Auch können mehrere Kochstellen 11 (nicht dargestellt) mit jeweils einem zugeordneten haptischen Empfangselement 14 (nicht dargestellt) dazu verwendet werden, den Kochtopf 2 insbesondere aufgrund der Signalstärke des haptischen Signals derjenigen Kochstelle 11 zuzuordnen, auf welcher der Kochtopf 2 angeordnet ist. Alternativ oder ergänzend können mindestens drei haptische Empfangselemente eine Triangulation zur Zuordnung der beweglichen Bedienvorrichtung ermöglichen. Die haptischen Empfangselemente sind alternativ nicht im Bereich der jeweiligen Kochstelle angeordnet, um einen negativen Einfluss durch thermische Beanspruchung oder Streufelder der Spulen zu vermeiden.

Insbesondere kann somit ein erfindungsgemäßes Verfahren vom Kochfeld 1 bzw. dessen Steuerungseinheit 13 und vom Kochtopf 2 bzw. dessen Steuerungseinheit 25 wie folgt umgesetzt werden, wobei das haptische Sendeelement 24 des Kochtopfs 2 das haptische Signal derart erzeugt, dass das haptische Signal sowohl vom Benutzer am Eingabeelement 23 des Kochtopfs 2 wahrgenommen als auch vom haptischen Empfangselement 12 des Kochfelds 1 erfasst werden kann, wenn der Kochtopf 2 auf der Kochstelle 11 des Kochfelds 1 angeordnet ist:
Es erfolgt ein Tätigen 100 einer Eingabe durch den Benutzer am Eingabeelement 23 des Kochtopfs 2. Es erfolgt nun ein Erfassen 200 der Eingabe des Benutzers am Eingabeelement 23 des Kochtopfs 2. In Reaktion auf die erfasste Eingabe erfolgt ein Erzeugen 300 eines haptischen Signals mittels des haptischen Sendeelements 24 des Kochtopfs 2.

Zum einen führt dies zu einen Wahrnehmen 400 des haptischen Signals durch den Benutzer am Eingabeelement 23 des Kochtopfs 2. Zum anderen führt dies zu einem Erfassen 450 des haptischen Signals mittels des haptischen Empfangselements 12 des Kochfelds 1 dort. Sind mehrere Kochstellen 11 und haptische Empfangselement 12 am Kochfeld 12 vorhanden, so erfolgt stattdessen ein Erfassen 500 des haptischen Signals mittels der haptischen Empfangselemente 12 des Kochfelds 1 und dann ein Zuordnen 550 des Kochtopfs 2 zu einer der Kochstellen 11 des Kochfelds 1 in Abhängigkeit des erfassten haptischen Signals, vorzugsweise in Abhängigkeit der Stärke des erfassten haptischen Signals und/oder des Zeitpunkts des Eintreffens des haptischen Signals bei einer oder mehreren haptischen Empfangselementen.

In jedem Fall erfolgt anschließend ein Betreiben 600 des Kochfelds 1 bzw. der, ggfs. zugeordneten, Kochstelle 11 des Kochfelds 1 in Abhängigkeit des erfassten haptischen Signals. Zusätzlich oder alternativ kann in Reaktion auf das erfasste haptische Signal ein Paaren 700 des Kochtopfs 2 mit dem Kochfeld 1 bzw. mit der, ggfs. zugeordneten, Kochstelle 11 des Kochfelds 1 erfolgen. Zusätzlich oder alternativ kann ein Ausgeben 800 einer Information durch das Kochfeld 1 in Abhängigkeit des erfassten haptischen Signals erfolgen.

### Bezugszeichenliste (Bestandteil der Beschreibung)

- Y: Querrichtung; Breite
- Z: vertikale Richtung; Höhe

- 1, 2: Bediensystem; (induktives) Kochsystem

- 1: Betriebsvorrichtung; (induktives) Kochfeld
- 10: Abdeckung; Glaskeramikplatte; Arbeitsplatte
- 11: Aufnahme; Kochstelle
- 11a: Induktionsspule der Aufnahme 11 bzw. der Kochstelle 11
- 12: Leistungselektronik
- 13: Steuerungseinheit; Auswerteeinheit
- 14: haptisches Empfangselement; Schwingungsmesser

- 2: bewegliche Bedienvorrichtung; Gargeschirr; Kochtopf
- 20: Gargeschirrboden
- 21: Gargeschirrwand; Gargeschirrwandung
- 22: Griffelemente; Henkel
- 23: Eingabeelement; kapazitives Sensorelement; druckempfindliches Sensorelement; kapazitiver Slider; Touchdisplay
- 24: haptisches Sendeelement; ERM-Element; LRA-Element; piezobasierender Aktuator
- 25: Steuerungseinheit

- 100: Tätigen einer Eingabe durch den Benutzer am Eingabeelement 23
- 200: Erfassen einer Eingabe des Benutzers am Eingabeelement 23
- 300: Erzeugen eines haptischen Signals mittels des haptischen Sendeelements 24
- 400: Wahrnehmen des haptischen Signals durch den Benutzer am Eingabeelement 23
- 450: Erfassen des haptischen Signals mittels des haptischen Empfangselements 12
- 500: Erfassen des haptischen Signals mittels der haptischen Empfangselemente 12
- 550: Zuordnen der beweglichen Bedienvorrichtung 2 zu einer der Aufnahmen 11 in Abhängigkeit des erfassten haptischen Signals
- 600: Betreiben der Betriebsvorrichtung 1 in Abhängigkeit des erfassten haptischen Signals
- 700: Paaren der beweglichen Bedienvorrichtung 2 mit der Betriebsvorrichtung 1
- 800: Ausgeben einer Information durch die Betriebsvorrichtung 1 in Abhängigkeit des erfassten haptischen Signals

## Patentansprüche

1. Verfahren zum Betrieb eines Bediensystems (1, 2), vorzugsweise eines Kochsystems (1, 2), besonders bevorzugt eines induktiven Kochsystems (1, 2),
wobei das Bediensystem (1, 2)
eine bewegliche Bedienvorrichtung (2), vorzugsweise ein Gargeschirr (2), mit wenigstens einem Eingabeelement (23) und mit wenigstens einem haptischen Sendeelement (24) und
eine Betriebsvorrichtung (1), vorzugsweise ein Kochfeld (1), besonders bevorzugt ein induktives Kochfeld (1), mit wenigstens einer Aufnahme (11), vorzugsweise mit wenigstens einer Kochstelle (11), für die bewegliche Bedienvorrichtung (2) und mit wenigstens einem haptischen Empfangselement (12)
aufweist,
wobei das haptische Sendeelement (24) der beweglichen Bedienvorrichtung (2) ausgebildet und eingerichtet ist, wenigstens ein haptisches Signal zu erzeugen, welches sowohl von einem Benutzer an der beweglichen Bedienvorrichtung (2), vorzugsweise an dem Eingabeelement (23) der beweglichen Bedienvorrichtung (2), wahrgenommen als auch vom haptischen Empfangselement (12) der Betriebsvorrichtung (1) erfasst werden kann, wenn die bewegliche Bedienvorrichtung (2) auf der Aufnahme (11) der Betriebsvorrichtung (1) angeordnet ist,
wobei das Verfahren wenigstens die Schritte aufweist:
• Erfassen (200) einer Eingabe des Benutzers am Eingabeelement (23) der beweglichen Bedienvorrichtung (2),
• in Reaktion auf die erfasste Eingabe, Erzeugen (300) eines haptischen Signals mittels des haptischen Sendeelements (24) der beweglichen Bedienvorrichtung (2) und
• Erfassen (450) des haptischen Signals mittels des haptischen Empfangselements (12) der Betriebsvorrichtung (1).

2. Verfahren nach Anspruch 1 mit wenigstens dem weiteren Schritt:
• Betreiben (600) der Betriebsvorrichtung (1), vorzugsweise der Aufnahme (11) der Betriebsvorrichtung (1), in Abhängigkeit des erfassten haptischen Signals.

3. Verfahren nach Anspruch 1 oder 2 mit wenigstens dem weiteren Schritt:
• in Reaktion auf das erfasste haptische Signal, Paaren (700) der beweglichen Bedienvorrichtung (2) mit der Betriebsvorrichtung (1), vorzugsweise mit der Aufnahme (11) der Betriebsvorrichtung (1).

4. Verfahren nach einem der vorangehenden Ansprüche mit wenigstens dem weiteren Schritt:
• Ausgeben (800) einer Information durch die Betriebsvorrichtung (1) in Abhängigkeit des erfassten haptischen Signals.

5. Verfahren nach einem der vorangehenden Ansprüche,
wobei die Betriebsvorrichtung (1) wenigstens zwei Aufnahmen (11) für die bewegliche Bedienvorrichtung (2) und wenigstens zwei haptische Empfangselemente (12) aufweist,
wobei jedes haptische Empfangselement (12) einer der beiden Aufnahmen (11) zugeordnet angeordnet ist,
wobei das Verfahren wenigstens die Schritte aufweist:
• Erfassen (500) des haptischen Signals mittels der haptischen Empfangselemente (12) der Betriebsvorrichtung (1) und
• Zuordnen (550) der beweglichen Bedienvorrichtung (2) zu einer der Aufnahmen (11) der Betriebsvorrichtung (1) in Abhängigkeit des erfassten haptischen Signals, vorzugsweise in Abhängigkeit einer Stärke und/oder eines Zeitpunkts des erfassten haptischen Signals.

6. Verfahren gemäß Anspruch 5, wobei die Betriebsvorrichtung (1) wenigstens drei haptische Empfangselemente (12) aufweist, und wobei die Zuordnung der beweglichen Bedienvorrichtung (2) zu einer der Aufnahmen (11) der Betriebsvorrichtung auf einer Triangulation des erfassten haptischen Signals basiert.

7. Verfahren nach einem der vorangehenden Ansprüche,
wobei das haptische Empfangselement (12) der Betriebsvorrichtung (1) unterhalb einer Abdeckung (10) der Betriebsvorrichtung (1), vorzugsweise außerhalb eines Bereichs der Aufnahme (11), angeordnet ist.

8. Verfahren nach einem der vorangehenden Ansprüche,
wobei das Eingabeelement (23) der beweglichen Bedienvorrichtung (2) ausgebildet und eingerichtet ist, wenigstens zwei unterschiedliche Eingaben des Benutzers zu erfassen,
wobei das haptische Sendeelement (24) ausgebildet und eingerichtet ist, in Abhängigkeit der erfassten Eingabe zwei unterschiedliche haptische Signale zu erzeugen, und
wobei das haptische Empfangselement (12) der Betriebsvorrichtung (1) ausgebildet und eingerichtet ist, die beiden haptischen Signale zu unterscheiden.

9. Verfahren nach einem der Ansprüche 2 bis 7 und nach Anspruch 8,
wobei das Betreiben (600) der Betriebsvorrichtung (1) in Abhängigkeit der erfassten unterschiedlichen haptischen Signale erfolgt.

10. Verfahren nach Anspruch 8 oder 9,
wobei sich die beiden haptischen Signale durch ihre Amplitude, durch ihre Frequenz und/oder durch ein aufmoduliertes Muster unterscheiden.

11. Verfahren nach einem der vorangehenden Ansprüche,
wobei das Eingabeelement (23) der beweglichen Bedienvorrichtung (2) ein kapazitives Sensorelement (23), ein druckempfindliches Sensorelement (23), ein kapazitiver Slider (23) oder ein Touchdisplay (23) ist.

12. Verfahren nach einem der vorangehenden Ansprüche,
wobei das haptische Sendeelement (24) ein ERM-Element (24), ein LRA-Element (24) oder ein piezobasierender Aktuator (24) ist.

13. Verfahren nach einem der vorangehenden Ansprüche,
wobei das Eingabeelement (23) und/oder das haptische Sendeelement (24) an oder in einem Griffelement (22) der beweglichen Bedienvorrichtung (2) angeordnet ist.

14. Betriebsvorrichtung (1), vorzugsweise Kochfeld (1), besonders vorzugsweise induktives Kochfeld (1), zur Durchführung eines Verfahrens nach einem der Ansprüche 1 bis 13.

15. Bewegliche Bedienvorrichtung (2), vorzugsweise Gargeschirr (2), zur Durchführung eines Verfahrens nach einem der Ansprüche 1 bis 13.
